Europäisches Patentamt

European Patent Office

Office européen des brevets

(11) Veröffentlichungsnummer: **0 615 993 A1**

# (12) EUROPÄISCHE PATENTANMELDUNG

(21) Anmeldenummer: **94103576.8**

(22) Anmeldetag: **09.03.94**

(51) Int. Cl.5: **C08G 18/80**, C08G 18/78, C08G 18/79, C09D 175/04

(30) Priorität: **16.03.93 DE 4308332**

(43) Veröffentlichungstag der Anmeldung: **21.09.94 Patentblatt 94/38**

(84) Benannte Vertragsstaaten: **AT BE CH DE FR GB IT LI NL**

(71) Anmelder: **BASF Aktiengesellschaft Carl-Bosch-Strasse 38 D-67063 Ludwigshafen (DE)**

(72) Erfinder: **Wolff, Stefan, Dr. Carl-Bosch-Strasse 43 D-67117 Limburgerhof (DE)** Erfinder: **Renz, Hans, Dr. Gartenstrasse 45 D-67149 Meckenheim (DE)** Erfinder: **Mohrhardt, Guenter Verdistrasse 19 D-67346 Speyer (DE)**

(54) **Härtungsmittel für Zweikomponenten-Polyurethansysteme, insbesondere Zweikomponenten-Polyurethanlacke, sowie ein Verfahren zu ihrer Herstellung.**

㉗ Die Erfindung betrifft Härtungsmittel für Zweikomponenten-Polyurethansysteme, insbesondere Zweikomponenten-Polyurethanlacke, bestehend aus Biuret- oder Isocyanuratgruppen, Uretdiongruppen, Urethangruppen sowie tertiäre Aminogruppen enthaltenden Polyisocyanaten, sowie ein Verfahren zu ihrer Herstellung.

Rank Xerox (UK) Business Services
(3. 10/3.0 9/3.3.4)

Gegenstand der Erfindung sind Härtungsmittel für Zweikomponenten-Polyurethansysteme, insbesondere Zweikomponenten-Polyurethanlacke, sowie ein Verfahren zu ihrer Herstellung.

Als Isocyanatkomponente für Zweikomponenten-Polyurethanlacke, sogenannte Härtungsmittel, werden üblicherweise Biuret- oder Isocyanuratgruppen und Uretdiongruppen enthaltende, zumeist aliphatische Polyisocyanate eingesetzt.

Die Herstellung dieser Produkte erfolgt vorzugsweise durch katalytische Oligomerisierung von aliphatischen und/oder cycloaliphatischen Diisocyanaten, z.B. 1-Isocyanato-3,3,5-trimethyl-5-isocyanatomethylcyclohexan (IPDI) oder 1,6-Hexamethylendiisocyanat (HDI).

Als Katalysatoren können beispielsweise Hydroxide oder organische Salze von schwachen Säuren mit Tetraalkylammonium-Gruppen, Hydroxide oder organische Salze von schwachen Säuren mit Hydroxyalkylammonium-Gruppen, Alkalimetallsalze oder Zinn-, Zink- bzw. Bleisalze von Alkylcarbonsäuren eingesetzt werden.

In der GB-A-2 221 465 wird vorgeschlagen, die Isocyanurisierung aliphatischer Diisocyanate bei hohen Temperaturen in Gegenwart katalytischer Mengen einer organischen Verbindung, die mindestens eine aliphatische tertiäre Aminogruppe und mindestens eine aliphatische Hydroxylgruppe enthält, durchzuführen.

Hierbei läßt man die aliphatischen und/oder cycloaliphatischen Diisocyanate in Gegenwart des Katalysators, gegebenenfalls unter Verwendung von Lösungsmitteln und/oder Hilfsstoffen oder Biuretisierungsmitteln, bis zum Erreichen des gewünschten Umsatzes reagieren. Danach wird die Reaktion durch Desaktivierung des Katalysators abgebrochen und das überschüssige monomere Diisocyanat abdestilliert. Je nach dem verwendeten Katalysatortyp und den angewandten Reaktionsbedingungen erhält man Polyisocyanatmischungen, die unterschiedliche Anteile an Uretdion- und Biuret- oder Isocyanuratgruppen enthalten.

Zur Herstellung von Zweikomponenten-Polyurethan-Lacken werden die so hergestellten, Uretdiongruppen und Biuret- oder Isocyanuratgruppen enthaltenden Polyisocyanatmischungen in an sich bekannter Weise mit Polyhydroxyverbindungen, insbesondere mit Polyhydroxyacrylaten, umgesetzt. Die Aushärtung erfolgt durch Lufttrocknung und kann thermisch oder katalytisch beschleunigt werden. Problematisch ist, daß durch Zusatz der bekannten Standardkatalysatoren, wie z.B. Dibutylzinndilaurat, die zur Verfügung stehende Verarbeitungszeit des Systems drastisch verkürzt wird.

Es besteht daher ein Bedarf an Zweikomponenten-Polyurethansystemen, die im Vergleich zu den bekannten Systemen eine schnellere Aushärtung aufweisen, die aber dennoch eine ausreichende Verarbeitungszeit besitzen und ohne externe Katalyse auskommen.

Die Aufgabe der Erfindung war es, ein geeignetes Härtungsmittel für Zweikomponenten-Polyurethan-Systeme, insbesondere Zweikomponenten-Polyurethan-Lacksysteme, zu entwickeln, das die beschriebenen Nachteile des Standes der Technik vermeidet.

Die Aufgabe wird erfindungsgemäß gelöst durch Härtungsmittel für Zweikomponenten-Polyurethansysteme, insbesondere Zweikomponenten-Polyurethanlacke, die bestehen aus Biuret- oder Isocyanuratgruppen und Uretdiongruppen, Urethangruppen sowie tertiäre Aminogruppen enthaltenden organischen, insbesondere aliphatischen Polyisocyanaten.

Gegenstand der Erfindung sind demzufolge Härtungsmittel für Zweikomponenten-Polyurethansysteme, insbesondere Zweikomponenten-Polyurethanlacke, bestehend aus Biuret- oder Isocyanuratgruppen und Uretdiongruppen, Urethangruppen sowie tertiäre Aminogruppen enthaltenden organischen, insbesondere aliphatischen Polyisocyanaten, sowie deren Herstellung.

Die Herstellung der erfindungsgemäßen Härtungsmittel erfolgt nach an sich bekannten Methoden durch katalytische Oligomerisierung (Isocyanurisierung und Biuretisierung) von insbesondere aliphatischen und/oder cycloaliphatischen Diisocyanaten, Entfernung der nicht umgesetzten Monomeren und Nachbehandlung der erhaltenen Polyisocyanatmischungen.

Als Ausgangsdiisocyanate werden im allgemeinen aliphatische und/oder cycloaliphatische Diisocyanate, z.B. 1,4-Diisocyanatohexan, 1,6-Diisocyanatohexan (HDI), 1,12-Diisocyanatododecan, 1-Isocyanato-3,3,5-trimethyl-5-isocyanatomethyl-cyclohexan (IPDI), 4,4'-Diisocyanatodicyclohexylmethan, 1,5-Diisocyanato-2,2-dimethylpentan, 1,5-Diisocyanato-2-ethyl-2-propylpentan, 1,6-Diisocyanato-2,4,4-trimethylhexan, 1,5-Diisocyanato-2-methylpentan, insbesondere aber HDI, eingesetzt.

Die Oligomerisierung der Diisocyanate wird vorzugsweise bei Temperaturen im Bereich von 0°C bis 100°C unter Durchleiten von Inertgas, vorzugsweise Stickstoff, durchgeführt. Bei niedrigeren Temperaturen ist die Reaktionsgeschwindigkeit zu gering, bei höheren Temperaturen laufen verstärkt Nebenreaktionen ab.

Als Katalysatoren können alle für die Oligomerisierung von aliphatischen und/oder cycloaliphatischen Diisocyanaten geeigneten Katalysatoren eingesetzt werden, beispielsweise Hydroxide oder organische Salze mit schwachen Säuren von Tetraalkylammonium-Gruppen, Hydroxide oder organischen Salze mit schwachen Säuren von Hydroxyalkylammonium-Gruppen, Alkalimetallsalze oder Zinn-, Zink- bzw. Bleisalze von Alkylcarbonsäuren. Die Katalysatoren werden üblicherweise in einer Menge von 0,05 Gew.-% bis 2 Gew.-%, bezogen auf das Diisocyanat, eingesetzt.

Zur Reduzierung der Katalysatormenge ist es möglich, den Diisocyanaten vor der Oligomerisierung in an sich bekannter Weise eine geringe Menge, bis ca. 1 Gew.-%, bezogen auf das Diisocyanat, eines Diols, insbesondere eines Polyesterdiols, zuzusetzen.

Danach wird das Diisocyanat unter Rühren auf die Reaktionstemperatur gebracht und der Katalysator langsam zugegeben. Zur besseren Handhabung kann der Katalysator in einem Lösungsmittel gelöst werden. Es eignen sich hierzu beispielsweise Alkohole, insbesondere Diole, Ketone, Ether und Ester.

Nach Erreichen des gewünschten Umsetzungsgrades wird die Reaktion durch Desaktivierung des Katalysators, beispielsweise durch Zugabe eines Katalysatorgifts oder durch thermische Zersetzung des Katalysators, gestoppt. Anschließend wird die Reaktionsmischung in geeigneter, an sich bekannter Weise, etwa durch Destillation, beispielsweise mittels Dünnschichtverdampfer, von den monomeren Diisocyanaten befreit.

Erfindungsgemäß werden die so erhaltenen Polyisocyanatmischungen mit mit mindestens einer tertiären Aminogruppe substituierten ein- und/oder mehrwertigen Alkoholen umgesetzt.

Als solche Aminoalkohole sind beispielsweise tertiäre Amine, an deren Stickstoffatom mindestens eine Hydroxyalkylgruppe gebunden ist, einsetzbar. Es kann sich hierbei um aliphatische und/oder cycloaliphatische Verbindungen handeln, wobei das tertiäre Stickstoffatom auch in einem Ring eingebaut sein kann.

Beispielhaft genannt seien N-Alkyldialkanolamine, N,N-Dialkylalkanolamine, Trialkanolamine, aber auch N-Hydroxyalkyl substituierte Pyrrole oder Pyrrolderivate, N-Hydroxyalkyl substituierte Imidazole oder deren Derivate.

Vorzugsweise eingesetzt werden Aminoethanolderivate, wie Triethanolamin, Methyldiethanolamin, Dimethylethanolamin.

Die mit mindestens einer tertiären Aminogruppe substituierten ein- oder mehrwertigen Alkohole können einzeln oder in Form von Mischungen verwendet werden.

Es ist auch möglich, den entsprechenden Aminoalkohol dem Diisocyanat vor, während oder unmittelbar nach der Oligomerisierungsreaktion vor der Entmonomerisierung zuzusetzen. Hier kann es jedoch zu Reaktionen der Aminoalkohole mit monomeren Diisocyanaten kommen. Derartige Produkte weisen ein deutlich schlechteres Verhalten in den Polyurethansystemen auf.

Die Zugabe des mit mindestens einer tertiären Aminogruppe substituierten ein- oder mehrwertigen Alkohols erfolgt in einer Menge von 0,1 - 30 Gew.-%, bezogen auf die Polyisocyanatmischung. Vorzugsweise werden 1 - 20 Gew.-%, bezogen auf die Polyisocyanatmischung, eingesetzt bei 10 - 100 °C, vorzugsweise 20 - 80 °C.

Es wurde überraschend gefunden, daß bei Einarbeitung von tertiären Aminoalkoholen in Polyisocyanate ein Härtungsmittel erhalten wird, bei dessen Einsatz in einem Zweikomponenten-Polyurethansystem ein schneller härtendes System mit ähnlich guter Verarbeitbarkeit entsteht als bei Einsatz eines herkömmlichen Polyisocyanates. Die Verarbeitungszeit ist dabei gleichzeitig wesentlich länger als bei Verwendung eines herkömmlichen Polyisocyanates, welchem kurz vor der Verarbeitung in Zweikomponenten-Polyurethan-Lacksystemen Katalysatoren des Standes der Technik (beispielsweise tertiäre Amine und Zinnverbindungen), die die Lackhärtung beschleunigen, zugesetzt werden.

Die erfindungsgemäßen Härtungsmittel finden insbesondere bei der Herstellung von Zweikomponenten-Polyurethanlacken Verwendung.

Die Erfindung wird an nachfolgenden Beispielen erläutert:

Beispiel 1

Umsetzung eines Polyisocyanurats auf Basis Hexamethylendiisocyanat (HDI) mit einem Aminoalkohol.

1000 g einer 90 %igen Lösung eines Polyisocyanurats auf Basis HDI in Solvesso 100®/n-Butylacetat (1:1) mit folgenden Kennzahlen:

| NCO-Gehalt | 20,4 % |
| Viskosität | 393 mPas |

wurde mit unterschiedlichen Mengen Dimethylaminoethanol versetzt und 1 h bei 40 °C gerührt (Tabelle 1).

Tabelle 1

| Umsetzung von HDI-Polyisocyanurat mit Dimethylaminoethanol | | | |
|---|---|---|---|
| Beispiel | zugesetzte Menge [g] | NCO-Gehalt [%] | Viskosität [mPas] |
| 1.1 | 3 | 19,9 | 403 |
| 1.2 | 9 | 19,4 | 418 |
| 1.3 | 18 | 18,3 | 474 |

Beispiel 2

Umsetzung eines Polybiurets auf Basis HDI mit Dimethylaminoalkohol
350 g biuretisiertes HDI mit folgenden Kennzahlen:

| NCO-Gehalt | 23,7 % |
|---|---|
| Viskosität | 374 mPas |

wurden bei 40 °C mit 25 g Dimethylaminoethanol umgesetzt, wobei ein modifiziertes Polyisocyanat mit folgenden Daten enstand:

| NCO-Gehalt | 15,4 % |
|---|---|
| Viskosität | 1137 mPas |

Beispiel 3

Lackherstellung und anwendungstechnische Prüfung

Die gemäß Beispiel 1 hergestellten Polyisocyanuratumsetzungsprodukte wurden als Härterkomponente mit einem Hydroxyacrylatcopolymeren entsprechend einem NCO/OH-Äquivalentverhältnis von 1:1 vermischt. Durch Lösungsmittelzugabe wurde eine konstante Lackviskosität von 20 s (DIN-Becher, 4 mm Auslaufdüse) eingestellt. Der Viskositätsanstieg der so erhaltenen Klarlacke wurde in konstanten Zeitabständen gemessen. Das Härtungsverhalten der Lacke nach Rakelapplikation auf Glasplatten und Verdampfen des Lösungsmittels wurde bei Normklima (23 °C, 50 % rel. Luftfeuchte) als Funktion der Zeit bestimmt. Die exakte Versuchsdurchführung wird nachstehend erläutert.

80 g Hydroxyacrylatpolymerisat, 70 %ig gelöst in Butylacetat, OH-Zahl = 1353, wurden mit 28,4 g des Isocyanathärters aus Beispiel 1 vermischt und die Mischung mit Butylacetat verdünnt bis eine DIN 4 Becher-Viskosität (DIN 53211) von 20 s eingestellt war.

- In Abständen von 1 Stunde wurde die Viskosität des Lackes erneut gemessen.
- Der mittels Kastenrakel auf eine Glasplatte applizierte Klarlack (Schichtdicke von ca. 40 $\mu$m nach Verdunsten des Lösungsmittels) wurde unter Normklima gelagert. Das Härtungsverhalten wurde durch Messung der Pendeldämpfung nach Koenig (DIN 53157) in Zeitintervallen bestimmt.

Als Vergleich diente in allen Fällen das nicht modifizierte Ausgangsisocyanurat. Die gesammelten Ergebnisse sind in den Tabellen 2 - 4 zusammengefaßt.

Wie aus den Tabellen abzuleiten ist, wiesen die erfindungsgemäßen Lackhärter bei zum Vergleich ähnlichem Viskositätsverhalten der Lacklösungen in applizierter Form ein deutlich verbessertes Härtungsverhalten auf.

EP 0 615 993 A1

Tabelle 2: Rohstoff und Klarlackdaten

| Isocyanurat | NCO-Gehalt [%] | OH-Acrylat/OH-Zahl | L-FG* [%] 20 s | Gelzeit** [h] |
|---|---|---|---|---|
| Vergleich | 19,8 | 135 | 42,7 | 20,0 |
| Beispiel 1.1 | 19,9 | 135 | 45,2 | 20.7 |
| Beispiel 1.2 | 19,4 | 135 | 45,7 | 23,2 |
| Beispiel 1.3 | 18,3 | 135 | 45,1 | 22,2 |

Tabelle 3: Pendeldämpfungsanstieg [s] nach König

| Isocyanurat | [Tage] | | | | | |
|---|---|---|---|---|---|---|
| | 0,2 | 1 | 2 | 3 | 6 | 7 |
| Vergleich | 6 | 36 | 128 | 165 | 202 | 207 |
| Beispiel 1 | 10 | 83 | 175 | 195 | 207 | 214 |
| Beispiel 2 | 8 | 94 | 183 | 197 | 197 | 203 |
| Beispiel 3 | 7 | 112 | 189 | 201 | 209 | 205 |

Tabelle 4: Viskositätsanstieg (DIN 53211 – 4 mm Becher – Auslaufzeit [s] bei Raumtemperatur

| Isocyanurat | [Stunden] | | | | | | |
|---|---|---|---|---|---|---|---|
| | 0 | 2 | 3 | 5 | 6 | 7 | 8 |
| Vergleich | 20 | 23 | 24 | 26 | 27 | 29 | 31 |
| Beispiel 1 | 20 | 23 | 24 | 26 | 27 | 28 | 30 |
| Beispiel 2 | 20 | 23 | 24 | 25 | 27 | 28 | 30 |
| Beispiel 3 | 20 | 22 | 22 | 24 | 25 | 25 | 27 |

\*   Lackfestgehalt nach DIN 53216 der aus der eingestellten Viskosität resultiert

\*\*  Zeit bis zur Lackgelierung (Verfestigung)

**Patentansprüche**

1. Härtungsmittel für Zweikomponenten-Polyurethansysteme, insbesondere Zweikomponenten-Polyurethanlacke, bestehend aus Biuret- oder Isocyanuratgruppen und Uretdiongruppen, Urethangruppen sowie tertiäre Aminogruppen enthaltenden organischen Polyisocyanaten.

2. Härtungsmittel nach Anspruch 1, dadurch gekennzeichnet, daß die Polyisocyanate aliphatische Polyisocyanate sind.

3. Verfahren zur Herstellung von Härtungsmitteln nach Anspruch 1 oder 2, dadurch gekennzeichnet, daß man Biuret- oder Isocyanuratgruppen und Uretdiongruppen enthaltende Polyisocyanate mit einer oder mehreren mindestens eine tertiäre Aminogruppe und mindestens eine Hydroxylgruppe enthaltenden Verbindungen umsetzt.

4. Verfahren nach Anspruch 3, dadurch gekennzeichnet, daß die mindestens eine tertiäre Aminogruppe und mindestens eine Hydroxylgruppe enthaltenden Verbindungen in einer Menge von 0,1 bis 20 Gew.-%, bezogen auf das Polyisocyanat, zugesetzt werden.

Europäisches Patentamt

**EUROPÄISCHER RECHERCHENBERICHT**

Nummer der Anmeldung

EP 94 10 3576

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| P,X | EP-A-0 531 820 (BAYER)<br>* Ansprüche 1-3 *<br>* Seite 3, Zeile 3 - Seite 4, Zeile 57 *<br>--- | 1-4 | C08G18/80<br>C08G18/78<br>C08G18/79<br>C09D175/04 |
| Y | DE-A-19 22 626 (BAYER)<br>* Ansprüche 1,6,7,11 *<br>--- | 1-4 | |
| Y | US-A-5 137 972 (V.C. COOK)<br>* Ansprüche 1,18 *<br>--- | 1-4 | |
| A | US-A-2 968 672 (S.N. EPHRAIM)<br>* Anspruch 1 *<br>* Spalte 2, Zeile 11 - Zeile 32 *<br>--- | 1 | |
| A | FR-A-1 560 081 (BAYER)<br>* Seite 1, linke Spalte, Absatz 1 *<br>* Seite 2, linke Spalte, Absatz 3 - rechte Spalte, Absatz 1 *<br>--- | 1 | |
| D,A | GB-A-2 221 465 (MOBAY)<br>* Anspruch 1 *<br>* Seite 3, Zeile 25 - Seite 4, Zeile 16 *<br>----- | 1 | **RECHERCHIERTE SACHGEBIETE (Int.Cl.5)**<br><br>C08G<br>C07D |

Der vorliegende Recherchenbericht wurde für alle Patentansprüche erstellt

| Recherchenort | Abschlußdatum der Recherche | Prüfer |
|---|---|---|
| DEN HAAG | 5. Juli 1994 | Van Puymbroeck, M |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes
   Dokument

EPO FORM 1503 03.82 (P04C03)